# FASCICULE DE BREVET EUROPEEN

(11) **EP 0 926 619 B1**
(45) Date de publication et mention de la délivrance du brevet: **06.09.2000**
(21) Numéro de dépôt: 98490036.5
(22) Date de dépôt: 10.12.1998
(51) Int. Cl.: G06K 7/00

(54) **Interface de communication avec une carte à puce et dispositif équipé d'une telle interface**
Kommunikationsschnittstelle mit einer IC Karte und Vorrichtung mit solcher Schnittstelle
IC card communication interface and apparatus comprising such interface

(30) Priorité: 11.12.1997 FR 9715974
(43) Date de publication de la demande: 30.06.1999
(73) Titulaire: Micropross, 59800 Lille (FR)
(72) Inventeur: Tellier, Vincent, 59120 Loos (FR); Talaga, Michel, 59830 Louvil (FR); Deroo, Daniel, 59810 Lesquin (FR)
(74) Mandataire: Matkowska, Franck

(56) Documents cités:
- EP-A- 0 347 894
- EP-A- 0 617 379

## Description

L'invention concerne l'échange de données avec une carte à puce. Elle a plus précisément pour objet une interface de communication perfectionnée entre une unité de traitement, type microprocesseur, et une carte à puce. L'interface de communication de l'invention est destinée à être mise en oeuvre dans tout dispositif ayant pour fonction d'échanger, en émission et/ou en réception, des données avec une carte à puce, et en particulier dans un lecteur, programmateur ou testeur de cartes à puce.

On distingue à ce jour deux types de cartes à puce : les cartes à puce qui comportent essentiellement de la mémoire, et ne sont pas équipées de microprocesseur ou similaire ; les cartes à puce qui sont équipées d'un microprocesseur associé à de la mémoire et à des entrée/sorties. Dans la suite du présent texte, on désignera par le terme "carte à puce", les cartes à puce mettant en oeuvre un microprocesseur ou similaire.

Parmi les entrée/sorties d'une carte à puce, on trouve essentiellement une ligne de communication série bidirectionnelle, pour l'échange de données avec un dispositif extérieur, et une ligne d'horloge (CK) qui permet d'appliquer à la carte un signal d'horloge extérieur, servant au cadencement du microprocesseur de la carte à puce.

Les cartes à puce doivent à ce jour répondre à la norme internationale ISO 7816-3, en ce qui concerne leurs caractéristiques électriques. Conformément à cette norme, chaque octet est transmis sur la ligne de communication série, et est sérialisé selon le format suivant : un bit de départ (toujours à 0), huit bits de données D0 à D7 ou D7 à D0 (en logique positive ou négative), un bit de parité (paire ou impaire) et un bit d'arrêt. Chaque carte à puce se caractérise en outre par une unité de temps élémentaire correspondant à la durée de transmission d'un bit sur la ligne de communication série. Cette unité de temps élémentaire est désignée ETU dans la norme précitée, et dépend pour une carte à puce donnée, d'un facteur (F/D) et de la fréquence (Fs) du signal d'horloge appliqué à la carte à puce. Plus précisément l'unité de temps élémentaire (ETU) en secondes d'une carte à puce est donné par la formule : ETU = (F/D)/Fs. Chaque carte à puce est paramétrée avec des valeurs prédéterminées pour les paramètres F et D. En particulier la norme précitée précise que le paramètre F peut prendre les valeurs 372, 558, 744, 1116, 1488, 1860, 512, 768, 1024, 1536, 2048, et que le paramètre D peut prendre les valeurs 1, 2, 4, 8, 16, 32, 20, 1/2, 1/4, 1/8, 1/16, 1/32, 1/64. Avec certains types de cartes à puce, les valeurs des paramètres F et D peuvent en outre être modifiées, ce qui permet avantageusement de modifier la vitesse de dialogue de la carte à puce.

L'échange de données, en réception et/ou émission, entre d'une part un dispositif externe mettant en oeuvre un microprocesseur, tel qu'un lecteur, programmateur ou testeur de cartes à puce, et d'autre part une carte à puce, peut être réalisée à ce jour de deux manières différentes : au moyen d'un traitement purement logiciel mis en oeuvre par le microprocesseur du dispositif externe ou en mettant en oeuvre entre le microprocesseur du dispositif externe et la carte à puce une interface électronique conçue pour gérer la communication avec la carte à puce, via la ligne de communication série de la carte à puce.

S'agissant d'un traitement purement logiciel, le microprocesseur du dispositif externe doit connaître l'unité de temps élémentaire (ETU) de la carte à puce. En réception, le logiciel mis en oeuvre par le microprocesseur du dispositif externe est par exemple conçu pour scruter la ligne de communication série de la carte à puce, pour détecter le premier bit de départ envoyé par la carte à puce sur la ligne de communication série, pour prendre, à partir de la détection du bit de départ, l'état de la ligne de communication série à intervalle de temps prédéterminés correspondant à la valeur de l'unité de temps élémentaire (ETU) de la carte à puce, et enfin pour sérialiser en réception les bits reçus et reconstituer l'octet (bits de données D0 à D7) émis par la carte. La mise en oeuvre d'un traitement de type logiciel nécessite de simuler des temporisations logiciels calibrées en fonction de la fréquence du signal d'horloge appliqué à la carte à puce et des paramètres F et D, c'est-à-dire en fonction de l'unité de temps élémentaire (ETU) pour laquelle la carte à puce est configurée. En outre avec un traitement logiciel, la sérialisation des bits par exemple pour reconstituer un octet en réception est réalisable avec une unité de temps élémentaire (ETU) importante, et par exemple égale à 104µs, ce qui correspond à une vitesse de transmission usuelle de 9600 bauds, mais pose des problèmes avec des unités de temps élémentaires plus faibles, notamment de l'ordre de quelques microsecondes. Il faut en effet que la puissance de traitement du microprocesseur soit suffisante pour dérouler les instructions du logiciel dans le temps imparti par la vitesse de dialogue avec la carte à puce. Pour cette raison, la solution du traitement logiciel pour gérer l'échange de données avec la carte à puce est adaptée uniquement pour des applications mettant en oeuvre des vitesses de dialogue avec la carte à puce qui sont faibles.

Pour dialoguer avec une carte à puce à des vitesses plus élevées, c'est-à-dire en d'autres termes avec une carte à puce configurée avec une unité de temps élémentaire plus faible, on préfère adopter la seconde solution, à savoir la mise en oeuvre entre le microprocesseur du dispositif externe et la carte à puce d'une interface électronique conçue pour gérer la communication avec la carte à puce, via la ligne de communication série de la carte à puce.

Toutes les interfaces électroniques de communication avec une carte à puce connues à ce jour mettent en oeuvre des moyens de sérialisation des données, qui permettent en réception de reconstituer un octet et en émission de décomposer un octet. Ces moyens de sérialisation sont en règle générale constitués par un composant standard, du type ACIA, EPCI ..., qui est associé à un quartz ou oscillateur pour le cadencement de son fonctionnement. A ce jour, les moyens de sérialisation des données en émission ou réception sont cadencés par un premier signal d'horloge ayant une fréquence fixe prédéterminée, fournie par un quartz ou oscillateur, et le microprocesseur de la carte à puce est cadencé à partir d'un second signal d'horloge appliqué sur la ligne d'horloge (CK) de la carte à puce.

Les composants standards du marché dédiés à la sérialisation intègrent généralement des diviseurs d'horloge programmables et peuvent ainsi fonctionner, à partir du signal d'horloge de fréquence fixe qui leur est appliqué pour leur cadencement, avec différentes vitesses de transmission, qui correspondent aux vitesses usuelles entre ordinateurs, c'est-à-dire en pratique à des vitesses de 300, 600, 9600, 19200, 38400 et 115200 bauds. La programmation de la vitesse de transmission du composant à l'une des valeurs précitées est de manière usuelle réalisée en initialisant un paramètre à une valeur prédéterminée dans un registre du composant. Ainsi, dans les interfaces de communication précitées connues à ce jour, pour permettre le dialogue entre le composant standard dédié à la sérialisation et la carte à puce, il est nécessaire de programmer d'une part la vitesse de communication du composant standard et d'autre part l'unité de temps élémentaire (ETU) de la carte à puce à des valeurs qui soient compatibles. La programmation de l'unité de temps élémentaire (ETU) de la carte à puce peut être réalisée soit (première solution) en chargeant dans la carte à puce les valeurs appropriées pour les paramètres F et D, soit (seconde solution) en réglant judicieusement la fréquence du signal d'horloge appliquée à la carte de telle sorte que l'unité de temps élémentaire (ETU) de la carte soit compatible avec la vitesse de transmission des moyens de sérialisation.

Quelle que soit la solution retenue à ce jour, le principal inconvénient des interfaces de communication connues à ce jour est qu'elles autorisent un dialogue avec une carte à puce uniquement à une vitesse de transmission déterminée qui est fixée par les moyens de sérialisation de l'interface, et qui peut prendre uniquement un nombre très limité de valeurs. De surcroît ces valeurs de vitesse de transmission sont relativement faibles, et ne permettent notamment pas de dialoguer avec la carte à puce, au maximum de la capacité de transmission du microprocesseur de la carte à puce. Par exemple pour une fréquence d'horloge appliquée à la carte à puce de 3,57 MHz, et des paramètres F et D valant respectivement 372 et 1, l'unité de temps élémentaire de la carte à puce vaut 104µs, ce qui correspond à une vitesse de transmission de 9600 bauds ; cette vitesse de transmission est compatible avec les valeurs usuelles de transmission d'un composant standard de sérialisation, et il est possible de programmer le composant standard, en tenant compte de la fréquence du quartz ou de l'oscillateur cadençant le composant, en sorte de régler la vitesse de transmission de ce composant à 9600 bauds. En revanche, si l'on cherche par exemple à dialoguer avec une carte à puce configurée avec une unité de temps élémentaire nettement plus faible, et par exemple valant 4,65µs (horloge appliquée à la carte à puce valant 5MHz, et paramètres F et D valant respectivement 372 et 16), ce qui correspond à une vitesse de transmission de 215000 bauds, il n'est dans ce cas plus possible de programmer un composant standard de sérialisation pour obtenir une telle vitesse de transmission.

Les demandes de brevets européens EP-A-0.347.894 et EP-A-0.617.379 décrivent des dispositifs qui permettent de communiquer en lecture ou écriture avec une carte à puce, et qui mettent en oeuvre une interface de communication dans laquelle la seconde solution précitée a été retenue, c'est-à-dire une mise en compatibilité de l'unité de temps élémentaire (ETU) de la carte à puce avec la vitesse de transmission des moyen de sérialisation de l'interface par réglage de la fréquence d'horloge du signal appliqué à la carte à puce.

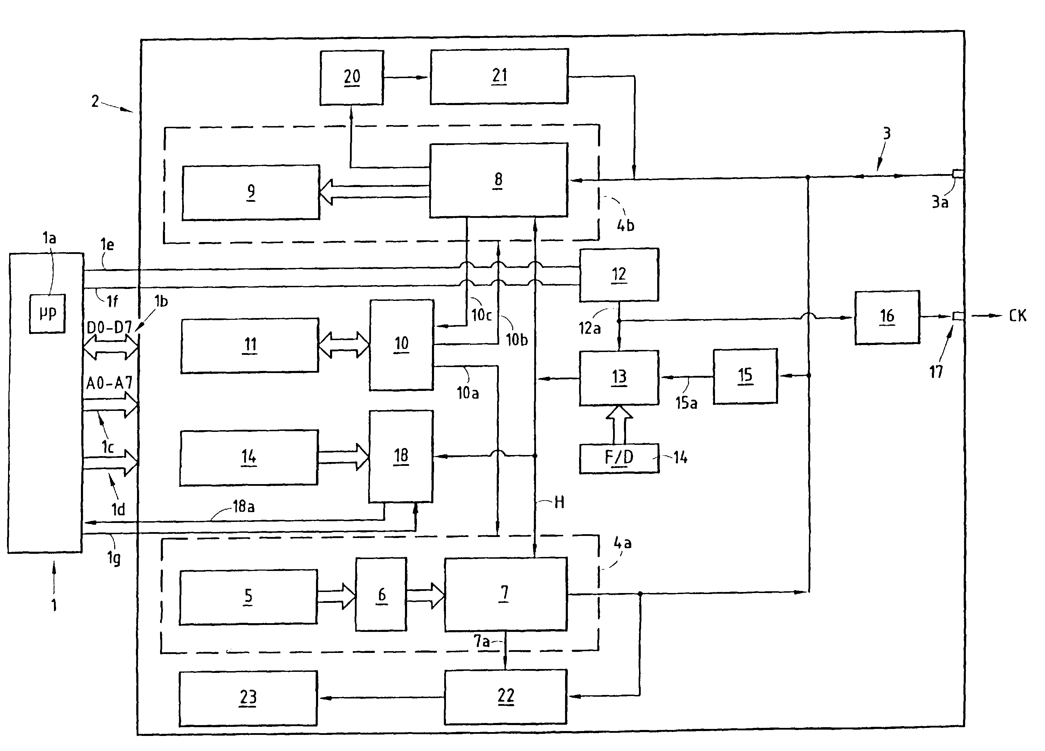

Plus particulièrement, dans la demande de brevet européen EP-A-0.347.894, le signal d'horloge appliqué à la carte à puce est généré selon le cas soit à partir d'un premier signal d'horloge de fréquence fixe prédéterminée, valant par exemple 14,7456 MHz (signal référencé 30 sur la figure 2 de cette publication, et généré par le générateur d'horloge référencé 21), soit par un second signal d'horloge de fréquence prédéterminé, valant par exemple 7,15909MHz (signal référencé 31 et issu du générateur d'horloge 32). Plus particulièrement, le premier ou deuxième signal d'horloge sélectionné alimente un diviseur de fréquence, qui a pour fonction de délivrer le signal d'horloge appliqué à la carte à puce avec un rapport de fréquence qui est programmé par les moyens de traitement (MPU). Ce rapport de fréquence est déterminé par ces moyens de traitement (MPU) à partir de la valeur des paramètres F et D de la carte à puce qui ont été lus au préalable à l'initialisation de la carte à puce. Dans cette publication, les moyens de sérialisation en émission et en réception des données échangées avec la carte à puce font partie intégrante des moyens de traitement (MPU) précités, et ne sont pas décrits. En particulier, le signal d'horloge qui permet de cadencer ces moyens de sérialisation n'est pas explicité. En tout état de cause, on peut déduire de cette publication, que les moyens de traitement (MPU) sont conçus pour échanger des données avec la carte à puce avec une vitesse de dialogue prédéterminée qui ne peut être modifiée, et sont prévus pour récupérer à l'initialisation de la carte à puce les paramètres F et D caractéristiques de l'unité de temps élémentaire (ETU) de la carte à puce et pour charger le diviseur de fréquence avec le rapport de division adéquat, de telle sorte que le signal d'horloge appliqué à la carte à puce permette d'obtenir une unité de temps élémentaire (ETU) qui est compatible avec la vitesse de dialogue prédéterminée des moyens de traitement (MPU).

Dans la demande de brevet européen EP-A-0.617.379, le signal d'horloge appliqué à la carte à puce correspond soit au signal d'horloge délivré par un premier oscillateur A, après division de la fréquence de ce signal, soit au signal d'horloge délivré par un deuxième oscillateur B. Les signaux délivrés par les oscillateurs A et B ont une fréquence fixe prédéterminée. Le signal délivré par l'oscillateur A est en outre utilisé comme signal d'horloge de référence pour les moyens de sérialisation en émission et réception. Ces moyens de sérialisation sont constitués par un composant standard (UART). Un tel composant standard est prévu pour être cadencé par un signal d'horloge de référence ayant une fréquence fixe prédéterminée, qui correspond à la fréquence de l'oscillateur A. Un tel composant standard peut éventuellement comporter une pluralité de registres, qui permettent de fixer la vitesse d'émission ou de réception des données par les moyens de sérialisation à une valeur prédéterminée, mais parmi un choix limité de valeurs discrètes. De manière similaire à la demande de brevet européen EP-A-0.347.894 précitée, dans le dispositif décrit dans la demande de brevet européen EP-A-0.617.379, la vitesse d'échange des données entre la carte à puce et les moyens de sérialisation (UART) est fixée à une valeur prédéterminée, qui peut éventuellement et au mieux être choisie parmi un nombre limité de valeurs discrètes, et le signal d'horloge alimentant la carte à puce est réglé à une valeur permettant de rendre l'unité de temps élémentaire (ETU) de la carte à puce compatible avec la vitesse de dialogue prédéterminée des moyens de sérialisation.

La présente invention a pour principal but de proposer une interface de communication entre une unité de traitement, de type microprocesseur, et une carte à puce qui permet de pallier l'inconvénient principal précité des interfaces connues à ce jour.

De manière usuelle, l'interface de l'invention permet de faire dialoguer une unité de traitement et une carte à puce qui comporte un microprocesseur et une broche d'horloge (CK) pour l'application d'un signal d'horloge externe permettant le cadencement du microprocesseur de la carte à puce, et qui est apte à recevoir ou émettre des données avec une unité de temps élémentaire (ETU) de transmission d'un bit valant K/FS, le facteur K étant une constante prédéterminée et le facteur FS correspondant à la fréquence du signal d'horloge externe appliqué sur la broche d'horloge (CK) de la carte à puce pour en cadencer le fonctionnement ; l'interface comporte une ligne de communication série pour l'échange de données avec la carte à puce, et des moyens de sérialisation des données échangées sur la ligne de communication série.

L'interface de l'invention est définie à la revendication 1.

A l'inverse des solutions de l'art antérieur proposées à ce jour,et mises en oeuvre plus particulièrement dans les dispositifs des deux demandes de brevets européens précitées EP-A-0.347.894 et EP-A-0.617.379, la solution de l'invention ne consiste plus à adapter la fréquence appliquée à la carte à puce afin de rendre compatible l'unité de temps élémentaire (ETU) de la carte à puce avec une vitesse de fonctionnement prédéterminée des moyens de sérialisation, mais consiste au contraire à adapter la vitesse de fonctionnement des moyens de sérialisation, c'est-à-dire la fréquence du signal d'horloge H permettant le cadencement des moyens de sérialisation, en fonction de l'unité de temps élémentaire (ETU) de la carte à puce. Ainsi, dans le cadre de l'invention, et contrairement aux solutions mises en oeuvre dans les deux demandes de brevets européens précitées, la carte à puce ne reçoit plus, pour le cadencement de son microprocesseur, un signal d'horloge dont la fréquence est fixée en fonction de la vitesse de fonctionnement des moyens de sérialisation, mais reçoit de manière avantageuse un signal d'horloge dont la fréquence peut être réglée à une valeur quelconque dans une plage de fonctionnement prédéterminée. L'échange de données entre la carte à puce et l'interface est synchrone avec l'horloge de l'interface. En réglant la fréquence de l'horloge de l'interface, on règle automatiquement l'unité de temps élémentaire (ETU) de la carte à puce et parallèlement la vitesse de traitement des moyens de sérialisation de l'interface. Pour modifier la vitesse de dialogue avec la carte à puce, il suffit donc simplement de régler la fréquence du signal de l'horloge de l'interface. En choisissant une horloge réglable de manière continue ou quasi-continue dans une plage de fréquences appropriée, et par exemple une horloge programmable entre 0 et 20 MHz, il devient possible d'échanger des données avec la carte à puce avec des vitesses de dialogue quelconques, pouvant être différentes des seules vitesses standards de communication, et qui plus est de dialoguer avec la carte à puce à vitesse élevée. Un autre avantage de l'interface de l'invention est qu'elle permet de s'affranchir des erreurs de transmission en cas de fluctuation ou défaut de précision du signal d'horloge.

Les possibilités d'échange de données à des vitesses élevées et facilement réglables qui sont offertes par l'interface de l'invention sont plus particulièrement intéressantes dans deux types d'applications. La première application est le test de la vitesse maximale limite de dialogue d'une carte à puce. Il suffit dans cette première application de dialoguer avec la carte à puce en augmentant progressivement la fréquence de l'horloge de l'interface, jusqu'à ce que la carte à puce décroche, ce qui permet de connaître la fréquence maximale effective applicable à la carte à puce. La seconde application se situe au stade de la production des cartes à puce, et plus particulièrement lors de l'étape de configuration (pré-personnalisation ou personnalisation) des cartes à puce par chargement de données en mémoire et en particulier des données nécessaires au fonctionnement du programme résident de la carte à puce et/ou à la sécurité du fonctionnement de la carte à puce. L'échange de données à vitesse élevée avec la carte à puce rendu possible par l'interface de l'invention permet avantageusement d'accélérer la vitesse de chargement des cartes à puce, et par là-même d'augmenter très sensiblement les cadences de production des cartes à puce.

D'autres caractéristiques et avantages de l'invention apparaîtront plus clairement à la lecture de la description qui va à présent être faite d'un exemple préféré de réalisation de l'invention, laquelle description est donnée à titre d'exemple non limitatif et en référence à l'unique figure annexée illustrant un synoptique de l'architecture électronique d'un dispositif, qui a pour fonction d'échanger des données en lecture ou en écriture avec une carte à puce, et qui équipé d'une interface de communication de l'invention.

Le dispositif illustré à la figure 1 comprend essentiellement une carte électronique 1 à base d'un microprocesseur 1a, d'architecture usuelle, et une interface de communication 2 conforme à l'invention, permettant au microprocesseur 1a d'échanger des données en émission ou réception avec une carte à puce (non représentée) . D'une manière plus générale, le microprocesseur 1a pourrait être constitué par toute unité de traitement conçue pour dialoguer avec une carte à puce en émission et/ou réception. Pour l'échange de données, l'interface 2 comporte de manière usuelle une ligne de communication série 3 bidirectionnelle connectée à une sortie 3a de l'interface 2. En fonctionnement, c'est-à-dire lorsque la carte à puce est connectée à l'interface 2, la sortie 3a est reliée à la broche (I/O) de la carte à puce dédiée à l'émission ou à la réception de données.

Dans ce qui suit, il est considéré que les données échangées sur la ligne de communication série 3 sont sérialisées selon le format de la norme internationale ISO 7816-3 : 1 bit de départ (toujours à 0), 8 bits de données D0 à D7 ou D7 à D0, un bit de parité et un bit d'arrêt. Bien entendu, l'invention n'est pas limitée à ce type de format, et peut notamment être mise en oeuvre pour transmettre une donnée qui n'est pas nécessairement un octet, mais qui peut être constitué d'un nombre quelconque de bits de données.

Pour permettre l'échange de données entre le microprocesseur 1a et la carte à puce, l'interface 2 comporte des moyens de sérialisation constitués essentiellement de deux modules : un premier module 4a dédié à l'émission de données par le microprocesseur en direction de la carte à puce via la ligne de communication série 3, et un second module 4b dédié à la réception par le microprocesseur 1a de données émises par la carte à puce et reçues par l'interface via sa ligne de communication 3. Le module d'émission 4a comprend successivement un registre d'émission 5, un module 6 ayant pour fonction d'ajouter un bit de parité à la donnée (D0-D7) issue du registre 5, et un module 7 dit de sérialisation en émission. Le registre d'émission 5 est de manière usuelle adressable en écriture par le microprocesseur 1a, au moyen d'un bus de données (1b), d'un bus d'adresse (1c) et d'un bus de contrôle (1d). Le module 7 a pour fonction d'émettre successivement, sur la ligne de communication série 3, à une cadence fixée par un signal d'horloge (H), les bits de données (D0-D7) et de parité, issus du module 6, en insérant en outre les bits de départ et d'arrêt. Le module de réception 4b comprend un module 8 dit de sérialisation en réception des données, qui a pour fonction d'échantillonner, à une cadence fixée par l'horloge H, les bits transitant sur la ligne de communication série 3, et de reconstituer en sortie une donnée (D0-D7) au format approprié. En sortie du module 8, la donnée (D0-D7) reconstituée est chargée dans un registre de réception 9 qui est de manière usuelle adressable en lecture par le microprocesseur 1a. Outre les deux modules d'émission et de réception 4a et 4b, les moyens de sérialisation comportent en outre un séquenceur 10 délivrant deux signaux de commande 10a, 10b à destination respectivement des modules d'émission 4a et de réception 4b. Ce séquenceur 10 reçoit en entrée un signal d'acquittement 10c, qui est émis par le module 8. Le séquenceur 10 peut être commandé par le microprocesseur 1a via un registre de commande 11 qui est adressable en lecture et écriture par le microprocesseur 1a.

L'émission ou la réception de données via la ligne de communication série 3 est réalisée de la manière suivante. En émission, le microprocesseur charge la donnée (D0 à D7) à émettre dans le registre d'émission 5 et commande le séquenceur 10 en chargeant la donnée de commande appropriée dans le registre de commande 11. Le séquenceur 10 commande le module émission 4a via le signal de commande 10a. La donnée (D0-D7) chargée dans le registre d'émission 5 est transmise en série sur la ligne de communication série 3 à une cadence d'émission fixée par la fréquence du signal d'horloge H. En réception, après détection par l'interface 2 d'un bit de départ par des moyens décrits ultérieurement, les moyens de sérialisation en réception 8 reconstituent, à une cadence de réception fixée par le signal d'horloge H, la donnée (D0-D7) reçue en série via la ligne de communication série 3, chargent la donnée (D0-D7) reconstituée dans le registre de réception 9, et avertissent le séquenceur 10 de la réception et du chargement de la donnée via le signal d'acquittement 10c. Le séquenceur 10 avertit le microprocesseur 1a de la réception de la donnée en chargeant la donnée de commande appropriée dans le registre 11 qui est lu périodiquement par le microprocesseur 1a. Lorsque le microprocesseur 1a détecte via le registre 11 qu'une donnée a été reçue et chargée dans le registre de réception 9, il récupère cette donnée via le bus de données 1b.

La caractéristique essentielle de l'invention réside dans la mise en oeuvre des signaux d'horloge d'une part pour le cadencement des modules d'émission et de réception 4a et 4b et d'autre part pour le cadencement du fonctionnement du microprocesseur de la carte à puce. Un exemple préféré de mise en oeuvre va être à présent décrit.

Si l'on se réfère à l'exemple préféré de réalisation de la figure 1 annexée, l'interface 2 comporte un générateur d'horloge 12, qui est programmable par le microprocesseur 1a via une liaison série synchrone constituée d'une ligne de données 1e et d'une ligne d'horloge 1f. Le générateur d'horloge 12 délivre un signal d'horloge 12a dont la fréquence est programmable par le microprocesseur 1a à une valeur quelconque dans une plage de fréquences prédéterminée. Dans un exemple précis de réalisation, le générateur d'horloge 12 était constitué par un composant standard commercialisée sous la référence FOX6053 et permettant d'obtenir en sortie un signal d'horloge 12a dont la fréquence pouvait être programmée à une valeur quelconque avec une erreur de l'ordre de 1 %, entre quelques centaines de Hertz et 120MHz.

L'interface 2 comprend en outre un compteur 13 qui délivre, à partir du signal d'horloge 12a, le signal d'horloge H cadençant les modules de sérialisation en émission 7 et en réception 8. A ce compteur 13 est associé un registre de programmation 14, qui est avantageusement adressable en écriture par le microprocesseur 1a. Le compteur 13 a pour fonction de compter chaque front (montant ou descendant) du signal 12a et délivre un signal d'horloge H qui est synchrone avec le signal d'horloge 12a délivré par le générateur d'horloge 12 et qui présente une fréquence inférieure dont la valeur correspond à la division de la fréquence du signal d'horloge 12a par la donnée qui a été chargée par le microprocesseur 1a dans le registre de programmation 14. Le compteur programmable 13 reçoit en outre en entrée un signal de synchronisation 15a délivré par un module 15 ayant pour fonction de détecter la réception d'un bit de départ sur la ligne de communication série 3. En particulier, lorsque la carte à puce émet une donnée série, elle commence par émettre sur la ligne de communication série 3 un bit de départ. Le module 15 détecte le changement d'état de la ligne 3 correspondant à l'émission par la carte à puce d'un bit de départ, et synchronise le fonctionnement du compteur 13 sur ce bit de départ.

De manière usuelle, une carte à puce est apte à échanger des données via sa broche (I/O) avec une unité temps élémentaire de transmission d'un bit communément appelé (ETU) qui est paramétrable et qui vaut K/Fs. Le facteur K est une constante prédéterminée paramétrable au niveau de la carte à puce, et le facteur Fs correspond à la fréquence du signal d'horloge externe que l'on applique sur la broche d'horloge (CK) de la carte à puce pour cadencer le fonctionnement du microprocesseur de la carte à puce. Dans l'exemple préféré de réalisation de la figure 1, le registre de programmation 14 pour la programmation du compteur 13 est chargé par le microprocesseur 1a avec une donnée correspondant à la valeur du facteur K à laquelle est paramétrée la carte à puce avec laquelle le microprocesseur 1a doit échanger des données.

Le signal d'horloge 12a délivré par le générateur d'horloge programmable 12 est également relié à une broche de sortie 17 de l'interface 2, laquelle broche de sortie est destinée à être connectée à la broche d'horloge (CK) de la carte à puce, c'est-à-dire à la broche de la carte à puce sur laquelle doit être appliqué le signal d'horloge externe servant au cadencement du microprocesseur de la carte à puce. Entre la broche 17 et le générateur d'horloge 12 est prévue une interface 16 permettant d'adapter le niveau logique (TTL) du signal 12a en un signal analogique dont la tension est compatible avec les niveaux de tension usuels admis par la broche (CK) d'une carte à puce.

Il est essentiel selon l'invention que le signal d'horloge destiné à être appliqué à la carte à puce via la broche 17 et le signal d'horloge H délivré par le compteur 13 pour cadencer les moyens de sérialisation 7 et 8 soient synchrones avec le même signal d'horloge 12a, dont la fréquence est en outre programmable. L'échange de données sur la ligne de communication série 3 devient ainsi synchrone par rapport au signal d'horloge 12a délivré par le générateur d'horloge programmable 12, et n'est en outre pas perturbé en cas de fluctuation de la fréquence du signal d'horloge 12a. Il est par conséquent avantageusement possible de faire dialoguer le microprocesseur 1a avec la carte à puce avec des vitesses de transmission quelconques dans la plage de fréquence du générateur d'horloge 12, la vitesse de transmission correspondant à la fréquence du signal d'horloge H. Pour modifier la vitesse de dialogue, il suffit au microprocesseur 1a d'agir sur la fréquence du signal d'horloge 12a en programmant avec une nouvelle valeur de fréquence le générateur d'horloge programmable 12. Plus particulièrement,le dialogue avec la carte à puce peut être réalisé à des vitesses élevées allant jusqu'à la limite de la vitesse de dialogue du microprocesseur de la carte à puce.

Il convient de noter que l'interface de communication de l'invention n'est pas limitée à l'exemple préféré de réalisation qui vient d'être décrit. La ligne de communication série n'est pas limitée à une ligne bidirectionnelle et peut être décomposée en deux lignes unidirectionnelles dédiées respectivement à l'émission et à la réception de données. Dans l'exemple de réalisation qui a été décrit, le signal d'horloge délivré par la broche 17 présente la même fréquence que le signal d'horloge 12a délivré par le générateur d'horloge programmable 12. Ceci n'est toutefois pas limitatif de l'invention. La seule caractéristique nécessaire pour l'invention au regard du signal d'horloge délivré par la broche 17 est que ce signal d'horloge soit synchrone avec le signal d'horloge 12a. Dans une autre variante, il est par conséquent envisageable que la fréquence du signal d'horloge transitant par la broche 17 soit un multiple de la fréquence du signal d'horloge 12a, un diviseur de fréquence pouvant par exemple être interposé entre la broche 17 et le signal d'horloge 12a ; dans ce cas, le registre de programmation 14 associé au compteur 13 sera chargé avec une donnée qui tient compte non seulement du facteur K de l'unité de temps élémentaire (ETU) de la carte à puce, mais également du rapport de fréquences entre le signal d'horloge transitant par la broche de sortie 17 et le signal d'horloge 12a, de telle sorte que d'une manière générale le rapport de fréquences entre le signal d'horloge transitant par la broche de sortie 17et le second signal d'horloge (H) soit égal au facteur K.

Le générateur d'horloge programmable 12 n'est pas nécessairement programmable par le microprocesseur 1a, mais pourra d'une manière générale être constitué par tout générateur d'horloge conçu pour délivrer un signal d'horloge 12a dont la fréquence est réglable dans une plage donnée de fréquences.

L'interface de l'invention présente plus particulièrement un certain nombre de fonctionnalités additionnelles avantageuses qui vont à présent être décrites. La première de ces fonctionnalités est le comptage d'unités de temps élémentaires (ETU) pour le microprocesseur 1a. Cette fonctionnalité est mise en oeuvre au moyen d'un compteur 18 qui peut être initialisé par le microprocesseur 1a via un signal de remise à zéro 1g, et qui est incrémenté (respectivement décrémenté) par le signal d'horloge H délivré par le compteur programmable 13. A chaque front montant (ou descendant) du signal d'horloge H correspond une unité de temps élémentaire (ETU) de la carte à puce. Le compteur 18 est associé à un registre de comptage 19, qui est adressable en écriture par le microprocesseur 1a, et qui est destiné à contenir la valeur finale (respectivement initiale) du compteur 18. Lorsque la valeur courante du compteur 18 est égale à la valeur chargée dans le registre de comptage 19 (respectivement 8b nulle), le compteur génère une interruption via le signal 18a à destination du microprocesseur 1a. La mise en oeuvre du compteur 18 programmable par le microprocesseur 1a, simplifie avantageusement pour le microprocesseur 1a le calcul de paramètres propres au dialogue et dont la base de temps est l'unité de temps élémentaire (ETU) de la carte à puce (temps inter-caractères, délais d'attente, etc...).

Une deuxième fonctionnalité additionnelle de l'interface illustrée à la figure 1 est le forçage de la ligne de communication série 3 pendant une durée prédéterminée en cas de détection d'une erreur de transmission en réception. La mise en oeuvre de cette fonctionnalité est réalisée par les modules 20 et 21. Le module 20 est un module de test de parité, c'est-à-dire un module vérifiant si le bit de parité échantillonné sur la ligne 3 par les moyens de sérialisation en réception 8 est à la bonne valeur. En cas d'erreur détectée, le module 20 commande le module 21 qui a pour fonction de forcer la ligne de communication série 3 pendant une durée prédéterminée. De préférence, la détection du bit de parité par le module 20 est réalisée après réception du bit d'arrêt par les moyens 8 et forçage intervient après une durée correspondant à 10,5 ETU après la détection du bit de départ sur la ligne 3 par le module 15. Le forçage de la ligne 3 est détecté par la carte à puce qui peut dans ce cas réitérer l'émission de la donnée dont la réception a été défectueuse.

La troisième fonctionnalité de l'interface de la figure 1 est liée à la détection d'une erreur de transmission à l'émission, et est mise en oeuvre principalement par le module 22 qui a pour fonction de tester l'état de la ligne de communication série 3 sur commande des moyens de sérialisation en émission 7 via un signal de commande 7a. Plus particulièrement, lorsque les moyens de sérialisation 7 ont émis sur la ligne de communication série 3 le dernier bit à transmettre, c'est-à-dire dans le cas de la norme internationale ISO 7816-3 le onzième et dernier bit correspondant au bit d'arrêt, ledit moyen 7 commande le module 22 pour la détection de l'état de la ligne d'entrée-sortie. Si l'état de la ligne d'entrée-sortie n'est pas conforme, c'est-à-dire dans le cas de la norme internationale ISO 7816-13, si l'état de la ligne 3 vaut O, le module 22 génère une erreur en modifiant la valeur d'un bit dans un registre d'état 23 qui est adressable en lecture par le microprocesseur 1a, en vue du traitement logiciel par le microprocesseur 1a de l'erreur en émission qui a été détectée.

## Revendications

1. Interface de communication (2) permettant de faire dialoguer une unité de traitement (1a) et une carte à puce, ladite carte comportant un microprocesseur et une broche d'horloge (CK) pour l'application d'un signal d'horloge externe permettant le cadencement du microprocesseur de la carte à puce, et ladite carte étant apte à recevoir ou émettre des données avec une unité de temps élémentaire de transmission d'un bit (ETU) valant K/FS, le facteur K étant une constante prédéterminée et le facteur FS correspondant à la fréquence du signal d'horloge externe appliqué sur la broche d'horloge (CK) de la carte à puce pour en cadencer le fonctionnement, l'interface comportant une ligne de communication série (3) pour l'échange de données avec la carte à puce, et des moyens (7; 8) de sérialisation des données échangées sur la ligne de communication série, l'interface comprenant également:
- une horloge (12) délivrant un premier signal d'horloge (12a) dont la fréquence est réglable,
- une sortie horloge (17) qui est destinée à être connectée à la broche d'horloge (CK) de la carte à puce et par laquelle transite le premier signal d'horloge (12a) ou un signal d'horloge synchrone avec ce premier signal d'horloge (12a), et
l'interface étant caractérisée en ce qu'elle comprend également:
- des moyens (13, 14) délivrant, à partir du premier signal d'horloge (12a), un second signal d'horloge (H) qui permet le cadencement des moyens de sérialisation (7;8) et qui est synchrone avec le premier signal d'horloge (12a), avec un rapport de fréquences entre le signal d'horloge transitant par la sortie horloge (17) et le second signal d'horloge (H) qui est égal au facteur K.

2. Interface selon la revendication 1 caractérisé en ce que la fréquence du premier signal d'horloge (12a) délivré par l'horloge (12) est réglable de manière continue ou quasi-continue sur une plage de fréquences prédéterminée.

3. Interface selon la revendication 1 ou 2 caractérisée en ce que les moyens (13, 14) délivrant le second signal d'horloge (H) pour le cadencement des moyens de sérialisation mettent en oeuvre un compteur (13,14) qui est de préférence programmable.

4. Interface selon la revendication 1 caractérisée en ce qu'elle comprend un compteur (18) d'unité de temps élémentaire (ETU) conçu pour être incrémenté ou décrémenté par le second signal d'horloge (H).

5. Interface selon la revendications 1 caractérisée en ce qu'elle comprend des moyens (20,21) de forçage de l'état de la ligne de communication série (3), sur détection d'une erreur de transmission en réception.

6. Interface selon la revendication 1 caractérisée en ce qu'elle comprend des moyens (22) ayant pour fonction de tester l'état de la ligne de communication série (3), après chaque émission d'une donnée par les moyens de sérialisation en émission (7), et de générer une erreur en cas de détection d'un état erroné de la ligne (3).

7. Dispositif comportant une unité de traitement (1a) qui a pour fonction d'échanger des données en émission et/ou réception avec une carte à puce caractérisé en ce qu'il est équipé d'une interface de communication selon l'une quelconque des revendications 1 à 6.

8. Dispositif selon la revendication 7 caractérisé en ce que la fréquence du premier signal d'horloge (12a) délivré par l'horloge (12) de l'interface de communication est programmable par l'unité de traitement (1a).

9. Dispositif selon la revendication 7 caractérisé en ce que le rapport de fréquences K entre le signal d'horloge transitant par la sortie horloge (17) de l'interface et le second signal d'horloge (H) est programmable par l'unité de traitement (1a).

## Claims

1. A communications interface (2) enabling a processor unit (1a) to dialog with an IC card, said card including a microprocessor and a dock pin (CK) for application of an external clock signal enabling the microprocessor of the IC card to be docked, and said card being suitable for receiving or transmitting data with an elementary time unit (ETU) for transmitting one bit that is equal to K/FS, where the factor K is a predetermined constant and the factor FS corresponds to the frequency of the external dock signal applied to the clock pin (CK) of the IC card for the purpose of clocking operation thereof, the interface including a serial communications line (3) for interchanging data with the IC card, and serialization means (7; 8) for serializing the data interchanged over the serial communications line, the interface further comprising:
- a clock (12) delivering a first dock signal (12a) of adjustable frequency;
- a clock output (17) designed to be connected to the dock pin (CK) of the IC card and via which the first clock signal (12a) or a clock signal synchronous with said first clock signal (12a) travels; and
the interface being characterised in that it further comprises:
- means (13, 14) taking the first clock signal (12a) to deliver a second clock signal (H) which is synchronous with the first dock signal (12a) and which enables the serialization means (7; 8) to be clocked, the frequency ratio between the clock signal passing via the clock output (17) and the second dock signal (H) being equal to the factor K

2. An interface according to claim 1, characterised in that the frequency of the first clock signal (12a) delivered by the clock (12) is adjustable in continuous or quasi-continuous manner over a predetermined range of frequencies.

3. An interface according to claim 1 or 2, characterised in that the means (13, 14) delivering the second dock signal (H) for docking the serialization means implement a counter (13, 14) which is preferably programmable.

4. An interface according to claim 1, characterised in that it includes a counter (18) for counting elementary time units (ETU) and designed to be incremented or decremented by the second clock signal (H).

5. An interface according to claim 1, characterised in that it includes means (20, 21) for forcing the state of the serial communications line (3) on detecting a transmission error on reception.

6. An interface according to claim 1, characterised in that it includes means (22) having the function of testing the state of the serial communications line (3) after each transmission of a data word by the transmit serialization means (7), and of generating an error in the event of an erroneous state being detected on the line (3).

7. Apparatus comprising a processor unit (1a) having the function of interchanging data in transmission and/or reception with an IC card, the apparatus being characterised in that it is fitted with a communications interface according to any one of claims 1 to 6.

8. A device according to claim 7, characterised in that the frequency of the first clock signal (12a) delivered by the clock (12) of the communications interface is programmable by the processor unit (1a).

9. A device according to claim 7, characterised in that the frequency ratio K between the clock signal passing via the clock output (17) of the interface and the second clock signal (H) is programmable by the processor unit (1a).

## Patentansprüche

1. Datenübertragungsschnittstelle (2), die einen Dialog zwischen einer Verarbeitungseinheit (1a) und einer Chipkarte ermöglicht, wobei die Chipkarte einen Mikroprozessor und einen Taktgeberanschluß (CK) zum Anlegen eines externen Taktsignals aufweist, das die Taktung des Mikroprozessors der Chipkarte erlaubt, wobei die Karte mit einer Bitübertragungs-Elementarzeiteinheit (ETU) mit dem Wert K/FS Daten empfangen oder senden kann, wobei der Faktor K eine vorbestimmte Konstante ist und der Faktor FS der Frequenz des externen Taktsignals entspricht, das an den Taktgeberanschluß (CK) der Chipkarte angelegt wird, um ihren Betrieb zu takten, wobei die Schnittstelle eine serielle Datenübertragungsleitung (3) für den Datenaustausch mit der Chipkarte und Mittel (7; 8) zur Serialisierung der auf der seriellen Datenübertragungsleitung ausgetauschten Daten aufweist, wobei die Schnittstelle außerdem aufweist:
- einen Taktgeber (12), der ein erstes Taktsignal (12a) liefert, dessen Frequenz einstellbar ist,
- einen Taktausgang (17), der mit dem Taktgeberanschluß (CK) der Chipkarte verbunden werden soll und über den das erste Taktsignal (12a) oder ein mit diesem ersten Taktsignal (12a) synchrones Signal verläuft, und
wobei die Schnittstelle dadurch gekennzeichnet ist, daß sie weiter aufweist:
- Mittel (13, 14), die ausgehend vom ersten Taktsignal (12a) ein zweites Taktsignal (H) liefern, das die Taktung der Serialisierungsmittel (7; 8) ermöglicht und das mit dem ersten Taktsignal (12a) synchron ist, mit einem Frequenzverhältnis zwischen dem über den Taktausgang (17) verlaufenden Taktsignal und dem zweiten Taktsignal (H), das gleich dem Faktor K ist.

2. Schnittstelle nach Anspruch 1, dadurch gekennzeichnet, daß die Frequenz des ersten, vom Taktgeber (12) ausgegebenen Taktsignals (12a) in einem vorgegebenen Frequenzbereich kontinuierlich oder quasi-kontinuierlich regelbar ist.

3. Schnittstelle nach Anspruch 1 oder 2, dadurch gekennzeichnet, daß die das zweite Taktsignal (H) zur Taktung der Serialisierungsmittel ausgebenden Mittel (13, 14) einen Zähler (13, 14) verwenden, der vorzugsweise programmierbar ist.

4. Schnittstelle nach Anspruch 1, dadurch gekennzeichnet, daß sie einen Zähler (18) der Elementarzeiteinheit (ETU) aufweist, der so ausgebildet ist, daß er vom zweiten Taktsignal (H) inkrementiert oder dekrementiert wird.

5. Schnittstelle nach Anspruch 1, dadurch gekennzeichnet, daß sie Mittel (20, 21) zum Steuern des Zustands der seriellen Datenübertragungsleitung (3) bei Erfassung eines Übertragungsfehlers auf der Empfangsseite aufweist.

6. Schnittstelle nach Anspruch 1, dadurch gekennzeichnet, daß sie Mittel (22) aufweist, deren Funktion es ist, den Zustand der seriellen Datenübertragungsleitung (3) nach jedem Aussenden eines Datenwerts durch die sendeseitigen Serialisierungsmittel (7) zu testen und einen Fehler zu generieren, wenn ein Fehlerzustand der Leitung (3) erfaßt wird.

7. Vorrichtung mit einer Verarbeitungseinheit (1a), die die Funktion hat, im Sende- oder Empfangsbetrieb Daten mit einer Chipkarte auszutauschen, dadurch gekennzeichnet, daß sie mit einer Datenübertragungsschnittstelle gemäß einem der Ansprüche 1 bis 6 ausgestattet ist.

8. Vorrichtung nach Anspruch 7, dadurch gekennzeichnet, daß die Frequenz des ersten Taktsignals (12a), das vom Taktgeber (12) der Datenübertragungsschnittstelle geliefert wird, durch die Verarbeitungseinheit (1a) programmiert werden kann.

9. Vorrichtung nach Anspruch 7, dadurch gekennzeichnet, daß das Frequenzverhältnis K zwischen dem über den Taktausgang (17) der Schnittstelle verlaufenden Taktsignal und dem zweiten Taktsignal (H) durch die Verarbeitungseinheit (1a) programmiert werden kann.
